Europäisches Patentamt

European Patent Office

Office européen des brevets

(19)

(11) **EP 0 536 372 B1**

(12) **EUROPÄISCHE PATENTSCHRIFT**

(45) Veröffentlichungstag und Bekanntmachung des Hinweises auf die Patenterteilung:
**17.01.2001 Patentblatt 2001/03**

(51) Int Cl.⁷: **F24D 3/18**, F25B 29/00

(86) Internationale Anmeldenummer:
**PCT/DE92/00362**

(21) Anmeldenummer: **92909254.2**

(22) Anmeldetag: **30.04.1992**

(87) Internationale Veröffentlichungsnummer:
**WO 92/19919 (12.11.1992 Gazette 1992/28)**

(54) **FLÄCHENHEIZUNGS-/KLIMATISIERUNGSANLAGE**

SURFACE HEATING/AIR CONDITIONING SYSTEM

INSTALLATION DE CLIMATISATION/CHAUFFAGE PAR SURFACES ETENDUES

(84) Benannte Vertragsstaaten:
**DE DK ES FR GB SE**

(30) Priorität: **30.04.1991 DE 4114633**

(43) Veröffentlichungstag der Anmeldung:
**14.04.1993 Patentblatt 1993/15**

(73) Patentinhaber: **SCHEEL, Henning**
**D-23972 Lübow (DE)**

(72) Erfinder: **SCHEEL, Henning**
**D-23972 Lübow (DE)**

(56) Entgegenhaltungen:
**DE-A- 3 624 286          DE-A- 4 027 833**
**DE-C- 3 936 332          GB-A- 2 229 804**

• **RECKNAGEL, SPRENGER, H NMANN, "Taschenbuch fUr HEIZUNG + KLIMA TECHNIK", veröffentlicht 1990/91, R. Oldenburg Verlag MUnchen, Wien, Seiten 967,968**

**Beschreibung**

Zum Beheizen von Gebäuden wird etwa die Hälfte des gesamten Energiebedarfes Deutschlands eingesetzt. Heizwärme wird zu über 80 % aus der Verbrennung von fossilen Kohlenwasserstoffen erzeugt.

Es werden unwie derbringliche Reserven aufgezehrt und die Umwelt wird - auch wenn alle Schutzmaßnahmen greifen - durch das entstehende Kohlendioxid belastet.

Ein Ausweg ist die elektrisch angetriebene Wärmepumpe mindestens dann, wenn der Strom nicht aus fossil befeuerten Kraftwerken stammt.

Die Wirtschaftlichkeit von Wärmepumpen, die dem Stand der Technik entsprechen, läßt sich gut nach VDI 2067 "Berechnung der Kosten von Wärmeversorgungsanlagen", Blatt 6 "Wärmepumpen", September 89, ermitteln. Die einzig überall einsetzbare Wärmepumpe, die Luft-Wasser-Wärmepumpe, läßt sich danach nur bis zu einer Außentemperatur von -6°C - bei einer Jahresarbeitszahl von 2,7 - einsetzen.

Normale Klimaanlagen kühlen Räume durch Einblasen kalter, getrockneter Luft. Zugerscheinungen und Geräusche sind die Folge. Nach einer kürzlich veranstalteten Umfrage sind 80 % der Personen, die in klimatisierten Räumen arbeiten, mit dem Raumklima unzufrieden. Sie werden häufig krank.

Abhilfe soll die sogenannte Quellüftung in Zusammenarbeit mit Dekkenkühlung schaffen, vergl. "Die ungeliebte Klimaanlage" VDI-n, Nr 48, Seite 42, 30.11.1990 und DE-OS 3919143. Dabei werden in die Raumdecke kaltwasserbeschickte Kühlbleche eingebaut, die einen Teil der Kühllast ableiten. In der Mitte des Raumes werden sogenannte Frischluftquellen eingebaut, die an die Windhutzen alter Dampfer erinnern und "im Wege stehen". Durch Schwitzwasserbildung an der Decke kann es regnen. Durchfeuchtungsschäden - 50 % aller Bauschäden gehen auf Durchfeuchtung zurück, vergl. H. Haarich: "Die häufigsten Baufehler-Bauschäden", Rudolf Müller Verlag, Köln, 1987 - werden wahrscheinlich.

Viele Personen, die mit ihren Beinen im "Frischluftsee" waten, empfinden das als unangenehm.

Abhilfe soll das Einblasen von Störluft schaffen, vergl. DE-A-3732792. Das erinnert an das oft geübte Kurieren der Symptome, nicht aber an die Heilung der wirklichen Krankheiten.

Aus der DE-A-4 027 833 ist eine Einrichtung zur Klimatisierung von Gebäuden mit Hilfe von einer Wärmepumpe zu entnehmen.

Bekanntlich setzt sich der Wärmebedarf eines Gebäudes aus dem Transmissionswärmeverlust und dem Lüftungswärmebedarf zusammen, vergl DIN 4701. Ein erfinderischer Grundgedanke ist es, daß sich thermische Behaglichkeit für Menschen dann erheblich und dauernd verbessern läßt, wenn beide Teile des Wärmebedarfs getrennt behandelt werden. Dabei ist es günstig, die Transmissionsverluste direkt am Ort ihres Entstehens: in den Außenwänden, zu kompensieren.

Bei näherer Untersuchung stellt sich oft heraus, daß der gefürchtete "Zug" gar nicht auf einen kalten Luftstrom zurückgeht, sondern auf ein Wärmestrahlungs-Defizit, vergl. H. Scheel: "Heizungstechnik im Umbruch", Lübeck, 9.7.1990 (Anlage).

Wie auch aus H. wach:"Gedanken zum konvektiven Wärmeübergang bei Behaglichkeitsuntersuchungen", HLH Bd. 41 (1990) Nr. 7, S. 590 - 594, hervorgeht, übersteigt der Wärmeverlust eines sitzenden oder stehenden Menschen durch Wärmestrahlung bei weitem den durch Konvektion.

Bekanntlich steigt der Strahlungsverlust eines Körpers mit der 4. Potenz der absoluten Temperatur seiner Oberfläche und sein Strahlungsgewinn mit der 4. Potenz der Temperatur derjenigen Raumumfassungsflächen, mit denen er im Strahlungsaustausch steht. Dabei muß natürlich jede derartige Fläche einzeln berücksichtigt werden. Das Dilemma eines örtlich zu hohen Strahlungsverlustes ("Zug") beginnt schon, wenn eine einzige dieser Flächen um mehr als 2 bis 3 K kälter ist als die anderen, vergl. VDI 2083 "Reinraumtechnik" Blatt 5 "Behaglichkeitskriterien", Pkt. 3.1.1, Oktober 1989.

Um Behaglichkeit zu ermöglichen, müssen alle Raumumfassungsflächen etwa gleich warm gehalten werden,"cold spots" sind zu vermeiden.

Aus Bild 12 dieser Richtlinie geht - nach Prof. Fanger - hervor, daß in der Nähe von Menschen keine Luftgeschwindigkeiten hoher Turbulenz mit mehr als ca. 0,1 m/s auftreten dürfen. Weil übliche Klimaanlagen diese Grenze z.T. sehr weit überschreiten, sind sie ungeliebt.

Die Lösung dieser Aufgabe geschieht durch die Merkmale des Patentanspruchs 1.

Die zu der ersten Kanalanordnung gehörende Wärmepumpenanlage kompensiert die Transmissionswärmeverluste des Gebäudes gleich an ihrer Quelle, d. h. auf kürzestem Wege. Sie bewirkt gleichzeitig, daß innen an den Gebäudeaußenflächen keine der gefürchteten kalten Stellen (cold spots) entstehen. Diese wirken nicht nur unbehaglich, sondern bieten auch Keimen Nährboden und ziehen schnell Feuchteschäden nach sich.

Die zur zweiten Kanalanordnung gehörende Wärmepumpenanlage klimatisiert die Zu- bzw. Raum (um)luft völlig zugfrei, leise und mit geringem Aufwand.

Bei hohen Klima-Anforderungen, wie sie in Reinräumen und Krankenhäusern bestehen, werden die Vorzüge dieser Erfindung besonders wirksam. Bei gleicher Wirksamkeit wie die konventioneller Anlagen sind die Gesamtkosten entscheidend niedriger.

Weitere Vorzüge gehen aus den als Ausführungsbeispiele gebrachten Zeichnungen hervor;

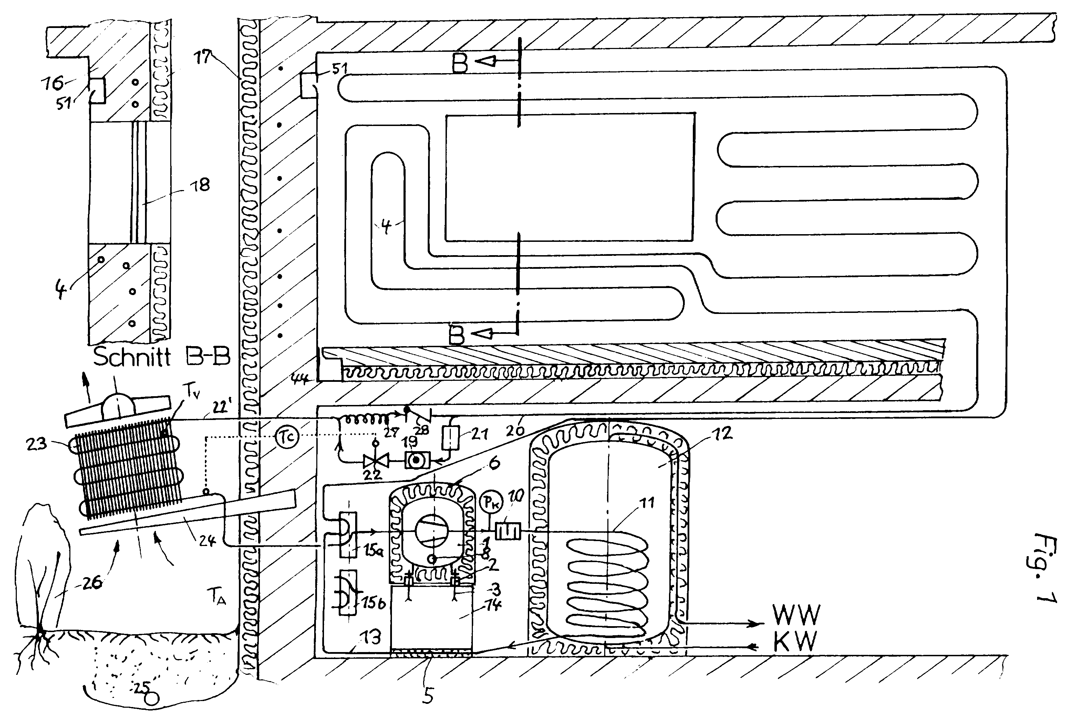

Fig. 1 Der Vollhermetikverdichter 1 ist über Gummi-Schwingungsdämpfer 2 mittels Maschinenschrauben 3 mit einem Schwerbetonstein 14 fest verbunden, der auf einer Körperschallisolierung 5 lose - das vereinfacht den Einbau und senkt die Schallemission - z.B. im Keller - steht. Er ist von einer Schalldämmhaube 6 vollständig umgeben, die zusammen mit einem PTC Kurbelwannenheizer 8 dafür sorgt, daß sein Öl bei Stillstand des Verdichters 1 ständig ca. 40°C warm ist.

Er drückt überhitzten R 22 Dampf an einem Hochdrucksensor $P_k$ vorbei über einen wahlweise eingebauten Schalldämpfer 10 in den oberen Teil des in einem wärmegedämmten Warmwasserbereiter 12 eingebauten Rohrschlangen-Wärmeübertragers 11. Dieser Dampf gibt dort den wärmsten Anteil seiner Überhitzungswärme an die höchsten, d.h. wärmsten Wasserschichten ab und erfaßt dann die unteren, kälteren Wasserschichten. (Durch diese Anordnung kann in der Praxis auch dann noch 45° C warmes Brauchwasser bereitet werden, wenn die Kondensationstemperatur im nachgeschalteten Heizrohr 4 nur ca. 20° C beträgt. Dieser Zustand wurde beim Sommerbetrieb an erfindungsgemäßen Anlagen gemessen. Sie sind deswegen besonders wirtschaftlich).

Die wärmegedämmte Druckgasleitung 13 bringt das z.T. enthitzte Druckgas über das in Heizstellung stehende Vierwegeventil 15 a (wegen des Wärmeübergangs an das Sauggas und die Umgebung und des Druckabfalls im Ventil sinkt die Heizgastemperatur um (nur) ca. 5 K) in das Heizrohr 4 in der Außenwand 16 und erwärmt diese infolge der guten Außendämmung 17 gleichmäßig.

Da diese Außenwand eine hohe Wärmekapazität hat, bleibt die Raumtemperatur, solange das hermetisch dicht schließende Fenster 18 geschlossen bleibt - auch bei Stillstandszeiten das Verdichters 1 von 16 h und mehr, auf besser als ± 0,5 K konstant. Eine gefürchtete Durchfeuchtung dieser Außenwand ist praktisch ausgeschlossen.

Die Heizrohre 4 sind in die Wand 16 in der Regel ziemlich waagerecht eingebaut, um die Verdichterschmieröl-Rückführung nicht zu gefährden. Aufsteigende Heizrohre sind, wo - im Verdampfungsfallnötig, mit geringerem Durchmesser verlegt.

Wie am Schauglas mit Feuchteindikator 19 überprüft werden kann, kondensiert der R 22-Dampf im Heizrohr 4 vollständig und fließt dann über die Kondensatleitung 20 von oben in den Filtertrockner 21, in dem Feuchte-, Säure- und Schmutzteilchen - auch bei Heißgas-Umkehr - festgehalten werden. Über das Schauglas 19 wird er dem thermostatischen Expansionsventil 22 zugeführt, das vorzugsweise mit einem hier nicht dargestellten äußeren Druckausgleich ausgerüstet wird.

Auf kürzestem Weg wird der entspannte Kältemitteldampf durch das Einspritzrohr 22' dem Hochleistungsgebläseverdampfer 23 zugeführt

Dieser trägt an der Stelle, an der normalerweise der stärkste (d.h. der bei Heißgasumkehr am spätesten abtauende) Eisansatz auftritt, den Temperaturfühler $T_V$.

Der Verdampfer 23 ist auf zwei preisgünstigen Konsolen 24 aus verzinktem Eisenblech, die in der Außenwand 16 eingemauert sind, so gehaltert, daß er die abgekühlte Luft nach oben mit kleinem Anstellwinkel nach außen weit fortbläst. Dadurch wird eine Verdampferleistungs-erniedrigende Luft-Rezirkulation vermieden.

Die Schallbelästigung der Nachbarn ist, wie Messungen ergaben, bei dieser Halterung niedriger als bei jeder vergleichbaren Ausrichtung eines gegebenen Verdampfers.

Das Kondenswasser kann so frei abtropfen und wird von dem mit einer Kiesfüllung umgebenen Dränagerohr 25 abgeleitet, ohne daß es dazu Rohrleitungen bedarf, die, weil sie zufrieren können, einer aufwendigen Beheizung bedürfen.

Hecken 26, die als Schall- und Sichtschutz dienen, werden durch dieses Kondenswasser auf einfachste Art und Weise automatisch bewässert.

Blätter und Schmutz, die vom Luftstrom des Verdampfers 23 ggf. angesaugt werden, fallen beim nächsten Aus-Takt oder wenn der Ventilator des Verdampfers 23 während der Heißgasumkehrphase abgeschaltet wird von selbst nach unten ab und gelangen in einem Bereich zur Ruhe, in dem sie nicht mehr vom Luftstrom erfaßt werden.

Um einen höchstmöglichen Verdampfungsenddruck zu gewährleisten, tritt das Sauggas an der Lufteintrittsseite des Verdampfers 23 aus ihm aus. Seine Überhitzung, die für eine Normaußentemperatur von - 10° am Ventil 22 eingestellt wird, überschreitet bei den Außentemperaturen, bei denen der Verdichter bei hohen Druckverhältnissen arbeiten muß, nicht mehr als ca. 10 K (davon entfallen ca. 3 K auf Druckabfall und Wärmeübertragung im Umkehrventil 15 a).

Dadurch ist gewährleistet, daß die Öltemperaturen des Verdichters 1 keine kritisch hohen Temperaturen erreichen, die seine Lebensdauer stark verkürzen würden, denn jedes K Sauggasüberhitzung verursacht mindestens eine um ca. 1,5 K höhere Verdichtungs-Endtemperatur.

Heißgas-Abtauung

Ist die Temperatur des Fühlers $T_V$ unter einen zum am Außentemperaturführer $T_A$ anstehenden Temperaturwert gehörigen, voreingestellten Temperaturgrenzwert gefallen und auch nach dem letzten Abtauzyklus eine voreingestellte Zeit vergangen, wird über ein nicht dargestelltes Schaltgerät das Umkehrventil 15 a in die Stellung 15 b umgeschaltet.

Wie an den im Inneren des Umschaltventils 15 b dargestellten, veränderten Verbindungen seiner Anschlüsse zu erkennen ist, wird damit das Heißgas (in besonderen Fällen wird es direkt dem Verdichter 1 entnommen - dann wird jedoch während des Abtaubetriebes das warme Wasser in 12 abgekühlt) direkt in den häufig am meisten vereisten unteren Teil des Verdampfers 23 geleitet, wo es seine Wärme abgibt.

Der Verdampfer ist jetzt also zum Kondensator geworden. Das kondensierte Kältemittel wird jetzt durch die Kapillare 27 (in einer häufigen Anwendung beträgt ihr Innendurchmesser 4 mm) und das Rückschlagventil 28 am Filtertrockner vorbei - in dem die gesammelten Schmutzteilchen ungestört liegen bleiben - in die ehemalige Kondensatleitung 20 eingespritzt und verdampft in der warmen Wand 16 wegen deren hohen Wärmekapazität mit gleichbleibend hohem Druck, also mit hoher Verdampfungstemperatur.

Über das Vierwegeventil 15 b wird es der Saugseite des Verdichters 1 zugeführt, der wegen der hohen Verdampfungstemperatur eine besonders hohe Abtau-Heizleistung abgibt, die das den Wärmeübergang blockierende Eis im Verdampfer besonders schnell abtaut. Messungen ergaben, daß bei stündlich wiederholtem Abtauzyklus dieser selten länger als 3 Minuten dauerte, also der Heizbetrieb höchstens 5 % unterbrochen blieb. Das ist weit unter dem Wert von <15 %, der von DIN 8900, Teil 4, Pkt. 6.2.2.2.2 verlangt wird, und stellt einen Teil der Begründung für die Tatsache dar, daß erfindungsgemäße Wärmepumpenanlagen in der Heizperiode 90/91 in Mecklenburg-Vorpommern bei Norm-Außentemperaturen von - 10° C Norminnentemperaturen von + 20° C erzeugt haben und zwar mit einer Arbeitszahl $\beta_{7c}$ = 2,7 in diesem Zustand.

Solange noch nicht abgetautes Eis im Verdampfer ist, steigt der Druck $p_k$ nur langsam an. Sobald das den Wärmeübergang von der Umgebungsluft auf das zu verdampfende Kältemittel tatsächlich behindernde bis abgetaut ist, steigt der Druck $p_k$ besonders schnell an, obwohl der Fühler $T_V$, der evtl. in einem kleinen, und damit insgesamt wenig wirksamen "Eisnest" sitzt, noch kalt ist.

Gegenüber dem Stand der Technik, das Abtauende einzuleiten, wenn der Fühler $T_V$ eine bestimmte, voreingestellte Temperatur erreicht hat, ist der dafür günstigste Zeitpunkt durch das Erreichen eines bestimmten, voreingestellten Druckänderungsbetrages

$$\frac{dp_k}{dt}$$

weit besser definiert. Damit wird dann nicht mehr zu lange abgetaut und die Wärmepumpenanlage führt nicht mehr als nötig mühsam gewonnene Heizwärme aus der Heizfläche zu Abtauzwecken zurück in die Umwelt ab.

Witterungsgeführte Innentemperatursteuerung

Das Verfahren, den Verdichter 1 bei mäßig niedrigen Außentemperaturen während der Schwachlasttarifzeit des EVUs eine empirisch ermittelte Stundenzahl ununterbrochen laufen zu lassen, um die Norm-Innentemperatur zu erreichen - die DIN V 4759 "Einbindung von Wärmepumpen mit elektrisch angetriebenen Verdichtern in bivalent betriebene Heizungsanlagen" spricht unter Pkt. 3.2.3 zu dem normalerweise dazu benötigten Trennspeicher (Mehrkosten!): "zur Sicherstellung einer ausreichenden, zusammenhängenden Laufdauer der Wärmepumpe" - ist verbessert worden.

Wie auch aus DIN 8900 Teil 6 "Meßverfahren für installierte Wasser/ Wasser-, Luft/Wasser- und Sole/ Wasser-Wärmepumpen" 12/87 auf Seite 4/5 hervorgeht, steigt die Vorlauftemperatur und damit auch der Kondensationsdruck einer Wärmepumpe im Teillastbetrieb ständig an. Damit nimmt ihr Druckverhältnis zu und die Arbeitszahl fällt ab.

Entgegen dem geschilderten Stand der Technik laufen erfindungsgemäße Wärmepumpen jeweils im Teillastbetrieb nur kurz, z.B. 15 Minuten lang.

Die zu beheizenden Wände 16 "spüren" nach dem Anlaufen des Verdichters wegen der hohen Geschwindigkeit des Kältemitteldampfes und seiner geringen Wärmekapazität schon nach Bruchteilen einer Minute neu zugeführte Wärme, während bei einer konventionellen WP erst der abgekühlte Kältemittel/Wasser Wärmeübertrager erwärmt werden muß, was Energie und viele Minuten Verzögerung in der Heizwirkung kostet. Deswegen verschlechtert das neue Verfahren die Wirksamkeit konventioneller Wärmepumpen.

Weil die zugeführte Wärme sofort wirksam wird, ist es günstig, sie nur kurze Zeit wirken zu lassen. Dabei steigt der Kondensationsdruck und damit das Druckverhältnis nur wenig an. Außerdem ist der Verdampfer 23 im Stillstand auf Umgebungstemperatur angewärmt. Kurz nach dem Einschalten des Verdichters 1 ist deswegen die Verdampfungstemperatur und damit auch der Verdampfungsdruck höher als im stationären Betrieb, d.h. das Druckverhältnis ist niedriger und damit die Arbeitszahl des Verdichters höher.

Ist der Verdichter nur kurze Zeit gelaufen, hat die Wand 16 sich nur ganz in der Nähe jedes Heizrohres um einige K erwärmt, während die weiter entfernten Wandbereiche mit erheblicher Zeitverzögerung folgen. Unklug ist es, jetzt den Verdichter weiter laufen zu lassen, weil sich dann im wesentlichen nur der Bereich der Wand 16, der sich in der Nähe des Heizrohres 4 befindet, stark erwärmt.

Klüger ist es, jetzt den Verdichter abzuschalten und zu warten, bis sich das Wärmepaket um das Heizrohr 4 auf die ganze Wand verteilt hat. Dann ist das Heizrohr selbst wieder erheblich kälter geworden und der Verdichter arbeitet bei seinem nächsten Arbeitstakt zunächst wieder mit einem ähnlich niedrigen Druckverhältnis wie beim Takt vorher.

Die beobachtete Steigerung der Jahresarbeitszahl von 2,7 auf ca. 3,5, die mit den ersten Anlagen in Mecklemburg-Vorpommern erreicht wurde, ist auf Verdichterlaufzeiten von 1/4 bzw. 1/2 h während einer Zykluszeit von 1 bis 2 h zurückzuführen.

Der nach dem Stand der Technik gefürchtete Verdichterverschleiß bei jedem Anfahren tritt nicht ein, weil die Kurbelwannenheizung 8 trotz ihrer geringen Leistungsaufnahme von ca. 20 W unter der dicken Schallschutzhaube 6 dafür sorgt, daß sich das Schmieröl des Verdichters 1 während der Stillstandszeit auf ca. 60° C erwärmt. Beim Anfahren des Verdichters sind die Losbrechkräfte wegen des dünnflüssigen Öls gering. Das gefürchtete Aufschäumen des als in der Kurbelwanne des Verdichters, die ja beim Anfahren eine plötzliche Druckabsenkung erfährt, tritt nicht mehr auf, weil das im öl gelöste Kältemittel durch die Wärme der Kurbelwannenheizung 8 schon ausgetrieben worden ist. Das Öl hat dabei auch beim Anfahren seine gute Schmierfähigkeit, die so über 10 Jahre lang erhalten bleibt.

Vorteilhaft ist es, in das Schaltgerät, das den Abtauzyklus einleitet, die Funktion der bei tieferer Außentemperatur $T_A$ häufigeren und länger andauernden optimalen Verdichter-Laufzeittakte, also eine witterungsgeführte Innentemperatursteuerung, zu integrieren. Normale Abtauuhren können nämlich den Abtauzyklus während der Aus-Zeit des Verdichters 1 einleiten (fehlende Synchronisation). Dabei bleibt der Verdampfer 23 vereist, das Druckverhältnis des Verdichters steigt und Heizleistung und Arbeitszahl sinken drastisch.

Sommerbetrieb der integrierten Warmwasserbereitung

Bei erfinderischen Anlagen mit vorgeschaltetem Warmwasserbereiter 12 tritt immer wieder die Frage auf, ob es nicht unwirtschaftlich ist, im Sommer das ganze Souterrain zu beheizen, dessen Fußbodenflächen anstelle der Wand 16 in Fig. 1 mit den den Warmwasserbereiter 12 folgenden Heizrohren 4 erfindungsgemäß ausgerüstet wird.

Natürlich kann im Sommerbetrieb die Heizrohranordnung 4 durch Magnetventile abgeschottet und das überschüssige Kältemittel einem zusätzlichen Sammler zugeführt werden, aus dem fehlendes Kältemittel, das z.B. durch etwas undichte Magnetventile hindurchgetreten und in den Heizrohren 4 kondensiert ist, ersetzt wird.

Dadurch steigt die für eine Anlage erforderliche Kältemittelmenge leicht über 10 kg an und die Vergünstigungen nach § 4 ünfallverhütungsvorschrift Abschnitt 20 "Kälteanlagen, Wärmepumpen und Kühleinrichtungen" vom 1.4.1989 entfallen.

Weiter steigt die Gefahr von durch Kältemittelverlagerung hervorgerufenen Störungen stark an.

Weiter wird die Gefahr, daß die im Sommer durch das angrenzende Erdreich gekühlten Umfassungsflächen durch auskondensierende Luftfeuchte (warme Sommerluft enthält viel Wasser) durchnäßt werden, durch die eintretende, geringe Beheizung des Souterrainfußbodens gebannt.

Wegen der hohen Außentemperatur $T_A$ ist im Sommer die Arbeitszahl des auf den Warmwasserspeicher 12 arbeitenden Verdichters sehr hoch. Wird der Fußboden des Souterrains im Sommer z.B. mit alten Teppichen abgedeckt, kondensiert dort weniger Kältemittel und ein noch größerer Anteil der Heizwärme kommt dem Brauchwasser zugute.

Vereinfachtes Belüftungssystem

Werden die Außenwandflächen und der Kellerfußboden mit erfindungsgemäßen Anlagen geheizt bzw. gekühlt, kann möglicherweise auf eine immer aufwendige Behandlung der Zuluft verzichtet werden.

Normale, unter einer abgehängten Decke verlegte Luftkanäle sind vor allem wegen des verschenkten Raumes aufwendig.

Preiswerter ist es, Be- oder Entlüftungskanäle im Winkel 44, vergl. Fig. 1 zwischen schon geputzter Wand und Rohdecke zu verlegen.

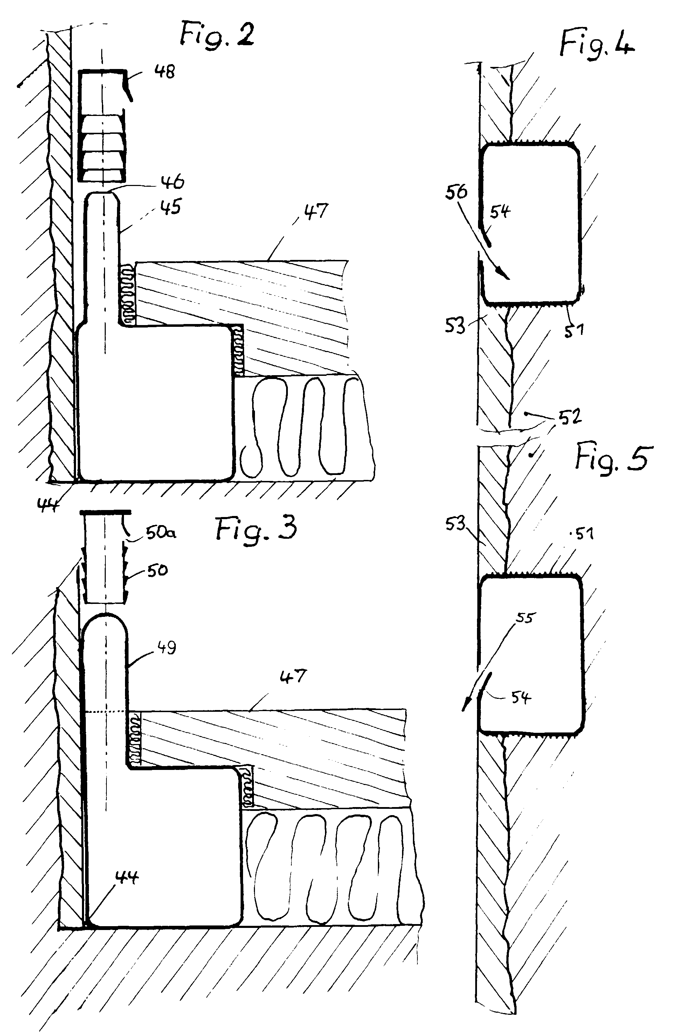

Dieser Winkel 44 ist auch in Fig. 2, 3 dargestellt. Problematisch dabei ist, daß meistens noch nicht bekannt ist, in welcher Höhe sich exakt der endgültige Fußboden befinden wird und daß offene Luftkanäle durch Bauschutt usw. verschmutzen können.

Fig. 2 Diese Probleme werden dadurch gelöst, daß im Winkel 44 zwischen schon geputzter Wand und Rohdecke ein Kanal, der einen rechteckigen Querschnitt mit daran anschließender Nase 45 aufweist, verlegt wird, die an ihrer Spitze leicht zu öffnende Löcher 46 trägt. Nachdem der Fußboden 47 fertiggestellt ist, wird die durch Erprobung festgestellte Zahl der Löcher 46 geöffnet und die Nase 45 durch eine fußleistenähnliche Kappe 48 verschlossen, die über die Nase geknöpft und in der gewünschten Höhe fixiert wird.

Fig. 3 stellt eine andere Ausführung dieser Erfindung dar. Dabei wird die Nase nach Fertigstellung des Fußbodens 47 in der gewünschten Höhe 49 abgeschnitten. Eine Kappe 50 wird in die entstehende Öffnung soweit hineingeschoben und ggf. verklebt, daß ihre Luftöffnung 50a in die gewünschte Lage kommt.

Fig. 4, 5 In die Rohwände 52 werden vorzugsweise über den Fenstern erfindungsgemäße Entlüftungskanäle 51, die vorzugsweise aus einem gerieften Aluminium-Strangpressprofil bestehen und zunächst verschlossen sind, genau ausgerichtet vorstehend eingebaut. Ihre Riefen dienen zur besseren Haftung in der Rohwand 52 und des Putzes 53.

Beim Auftrag des Putzes 53 dienen sie zunächst als sogenannte Abzugskanten, was das Putzen beschleunigt. Weil sie erst nach Beendigung des Baues längs vorhandener Riefen mit einem dazu geeigneten, hier nicht dargestellten Werkzeug geöffnet werden, können sie nicht verschmutzen. Weil die Entlüftungskanäle 51 im Bereich ihrer Schlitze 54 besonders duktil ausgeführt sind, kann ihre öffnungsweite ohne Bruch mehrfach z.B. wegen geänderter Lüftungsbedürfnisse verstellt werden. Der Pfeil 55 zeigt die Richtung eines Zuluftstromes, der Pfeil 56 die eines Abluftstromes an.

**Patentansprüche**

1. Anlage zum Heizen und Kühlen von Räumen, bei der mindestens in einer Raumumfassungsfläche (**16**) gasdruckdichte Kanäle (**4**) wärmeleitend eingebaut sind und im Heizfall den Kondensator oder im Kühlfall den Verdampfer einer einen Verdichter (**1**) und eine Drossel (**22**) aufweisenden Wärmepumpe bilden, wobei in den Kanälen (**4**) ein Schauglas mit Feuchteindikator (**19**) angeordnet ist, dadurch gekennzeichnet, daß der Verdichter (**1**) über einen Schwingungsdämpfer (**2**) aus Gummi mittels Maschinenschrauben (**3**) mit einem Betonsockel (**14**) verbunden ist, der selbst lose auf einer Körperschallisolierung (**5**) steht.

2. Anlage nach Anspruch 1, dadurch gekennzeichnet, daß der Verdichter (**1**) mit einer Schall- und Wärmedämmung (**6**) und einem Kurbelwannenheizer (**8**) ausgerüstet ist.

3. Anlage nach Anspruch 1, dadurch gekennzeichnet, daß ein Außenverdampfer (**23**) mit Gebläse außen an einer Wand angebracht ist und die abgekühlte Außenluft nach oben in einem Winkel nach außen fortgeblasen wird.

4. Anlage nach Anspruch 3, dadurch gekennzeichnet, daß der Außenverdampfer (**23**) von einer Hecke (**26**) umgeben ist, und daß das Kondens- oder Abtauwasser von einem mit einer Kiesschüttung umgebenen Drainagerohr (**25**) ableitbar ist.

5. Anlage nach Anspruch 1 und 3, dadurch gekennzeichnet, daß die Wärmepumpe mit einem Vierwegeventil (**15a, 15b**) umschaltbar ist.

6. Anlage nach Anspruch 1 und 5, dadurch gekennzeichnet, daß das Ende des Abtauzyklusses des Außenverdampfers (**23**) in Abhängigkeit vom Druckanstieg dpk/dt des Heißgases einleitbar ist.

7. Anlage nach Anspruch 1, dadurch gekennzeichnet, daß ein vorgeschalteter Wamwasserbereiter (**12**) vorgesehen ist, in dem ein Rohrschlangen-Kondensator (**11**) der Wärmepumpe angeordnet ist, der die Wasserschichten von oben nach unten durchdringt.

8. Anlage nach Anspruch 1, dadurch gekennzeichnet, daß ein mit einer Nase (**45, 46**) ausgerüsteter Zuluftkanal (**44**) im Winkel zwischen Innenwand und Decke (**41**) eingebaut ist, wobei die Zuluft durch eine fußleistenähnliche Kappe (**48, 50**) auf den erwärmten Randstreifen des Fußbodens (**47**) geblasen wird.

**Claims**

1. Surface heating/air conditioning system of rooms, wherein at least one space-encircling surface (16) contains gas-tight channels (4) of high thermal conductivity material which act in the heating mode as the condenser and in the cooling mode as the evaporator of a heat pump, which contains a compressor (1), channels (4), a sight-glas (19) and an expansion valve means (22).
   The compressor (1) stands on vibrations-dampers of rubber (2) guided by bolts (3) on a socle (14) of concrete, which stands loose on a sheet (5) of sound-absorbing material.

2. Surface heating/air conditioning system according to claim 1, wherin the compressor is surrounded by a thick noise- and heat isolation (6) and posseses an oil-heating means.

3. System according to claim 1, wherein the evaporator with a fan (23) is fixed at the outside to a wall inclined in such a way, that the beam of ambient air, which was cooled down, is blown aloft not exactly vertical but a little outwards.

4. System according to claim 3, wherein the evaporator (23) is surrounded by a hedge (26) and the condensing water is drained to a draining tube (25) within gravel.

5. System according to claim 1 and 3, wherein the heatpump may be switched from heating to cooling by a 4-port reversing valve (15a/15b).

6. System according to claim 1 and 5, wherein the end of the defrosting cycle of the evaporator (23) is governed by the rate of increase of pressure dpk/dt of the superheated refrigerant steam.

7. System according to claim 1, wherein the superheated refrigerant steam goes first to the tube-condenser (11) of a water-boiler (12), which crosses the temperature-layers of the water from above to the bottom.

8. System according to claim 1, wherein an air duct (44) with a nose (45,49) is placed whithin the corner between the inner wall and ceiling and the incomming air is blown by a top-piece (48,50) to the superheated rim of the floor (47).

**Revendications**

1. Installation de chauffage/refroidissement de locals en que au minimum en un surface de local renfermé (16), des tuyaux hermétiques (4) sont installés en bon contact thermique avec la surface et en cas de chauffage forment le condenseur ou en cas de refroidissement l' evaporateur d' un pompe de chaleur qui montre un compresseur (1) et un détendeur où dans les tuyaux (4) un plaque de verre avec indicateur d' humidité (19) est posés
caractérisèe par que le compresseur (1) est connexe par un amotisseur de vibration (2) en gomme au moyen de vis machine d'un socle en béton (14) qui même se trouve lâche sur un isolement du son du corps.

2.   Installation de chauffage/refroidissement selon la revendication 1 caractérisée par que le compresseur (1) est muni d'un silencieux, isolation phonetique et calorique (6) et un chauffeur à huile (8)

3.   Installation de chauffage/refroissement selon la revendication 1 caractérisée par que un evaporateur (23) avec une soufflerie est installé à l'extérieur d' un mur et l'air rafraîchi est soufflé vers le haut, mais ne pas vertical.

4.   Installation de chauffage/refroidissement selon la revendication 3 caractérisée par que l' evaporateur au dehors (23) est entouré d' une haie (26) et que l' eau de condensation ou de degelation est emmenable par un tuyau de drainage qui est entouré du gravier.

5.   Installation de chauffage/refroidissement selon la revendication 1 et 3 caractérisée par que la pompe à chaleur est commutable par une soupape réversible (15a, 15b).

6.   Installation de chauffage/refroidissement selon la revendication 1 et 5 caractérisée par que le fin de cycle de degelation du evaporateur au dehors est introduisable par l' augmentation de pression dpk/dt du gaz chaud.

7.   Installation de chauffage/refroidissement selon la revendication 1 caractérisée par que un magasin de eau chaud (12) est prévu, dans celui-ci un condenseur de tuyaux (11) de la pompe à chaleur est placé qui pénètre les couches de température de l' eau du haut en bas.

8.   Installation de chauffage/refroidissement selon la revendication 1 caractérisée par que un canal d' air fraîche qui est muni d' un nez (45,46) est installé en l'angle entre le mur intérieur et le plafond (41) par quoi l' air fraîche est souflée par un chaperon qui ressemble à un liteau à pied (48, 50) sur la bande au bord chauffé du plancher (47).

Fig. 1

Schnitt B-B

Fig. 2

Fig. 4

Fig. 3

Fig. 5